Europäisches Patentamt

(19) European Patent Office

Office européen des brevets

(11) Publication number : **0 174 359**
**B1**

(12) **EUROPEAN PATENT SPECIFICATION**

(45) Date of publication of patent specification :
30.11.88

(51) Int. Cl.⁴ : **G 01 F 17/00, G 01 B 21/00**

(21) Application number : 85901616.4

(22) Date of filing : 07.03.85

(86) International application number :
**PCT/SE 85/00101**

(87) International publication number :
**WO/8504246 (26.09.85 Gazette 85/21)**

(54) A SYSTEM FOR MEASUREMENT OF DIRECTION RELATED VOLUMES.

(30) Priority : 09.03.84 SE 8401328

(43) Date of publication of application :
**19.03.86 Bulletin 86/12**

(45) Publication of the grant of the patent :
**30.11.88 Bulletin 88/48**

(84) Designated contracting states :
**DE FR GB**

(56) References cited :
**EP-A- 0 119 876**
**US-A- 2 068 822**
**US-A- 2 632 952**

(73) Proprietor : **HSB:SRIKSFÖRBUND**
**Box 8310**
**S-104 20 Stockholm (SE)**

(72) Inventor : **HARD AF SEGERSTAND, GUNNAR**
**Börjessonsvägen 8**
**S-161 55 Bromma (SE)**
Inventor : **WICKENBERG, Göran**
**Renvägen 9**
**S-181 43 Lidingö (SE)**

(74) Representative : **Hynell, Magnus et al**
**Hynell Patenttjänst AB Box 236**
**S-683 02 Hagfors (SE)**

Jouve, 18, rue St-Denis, 75001 Paris, France

## Description

This invention relates to a system of the kind defined in the preamble of claim 1.

For height and direction related definitions of terrain, extension of streets, buildings etc, and other kind of height and values it is known to use theodolites, geodimeters, stereo-worked air photos etc. utilizing reference points in the net of triangulation of the country.

When measuring closed volumes of a limited size, such as flats and office premises, measurement is ordinarily carried out using measuring tapes. However, this is a time-consuming method which requires, in addition, a great number of checking measures. Nevertheless, the application of the method to a number of uniform spaces lying above each other show that the accuracy obtained is insufficient. Moreover, this method requires a lot of staff.

US-A-2 632 952 discloses a device for measuring the distance and direction from one point to another point. The device includes rotatable direction controlling means, and in combination therewith, a spring biased measuring tape. The device is completely mechanical and there are no provisions for a computerized system based on the mechanical device in combination with electronical signal meters.

It is the object of this invention to enable one single person to carry out accurate measurements of closed volumes in a simple way, particularly when measuring existing buildings in connection with reconditioning and the like.

The aforesaid object is achieved according to the invention through an arrangement as claimed in the characterizing portion of claim 1.

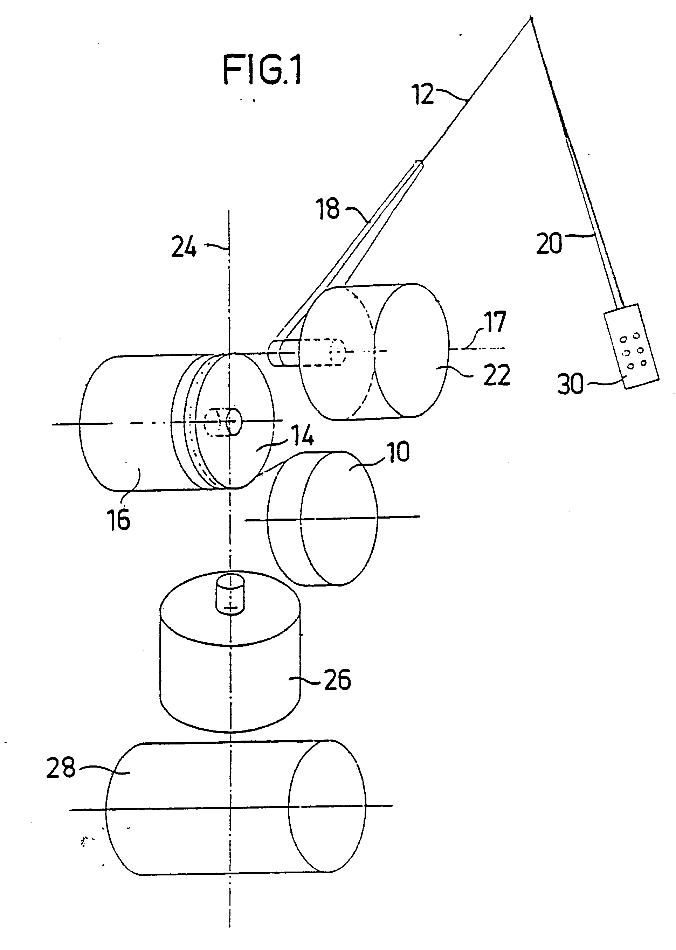

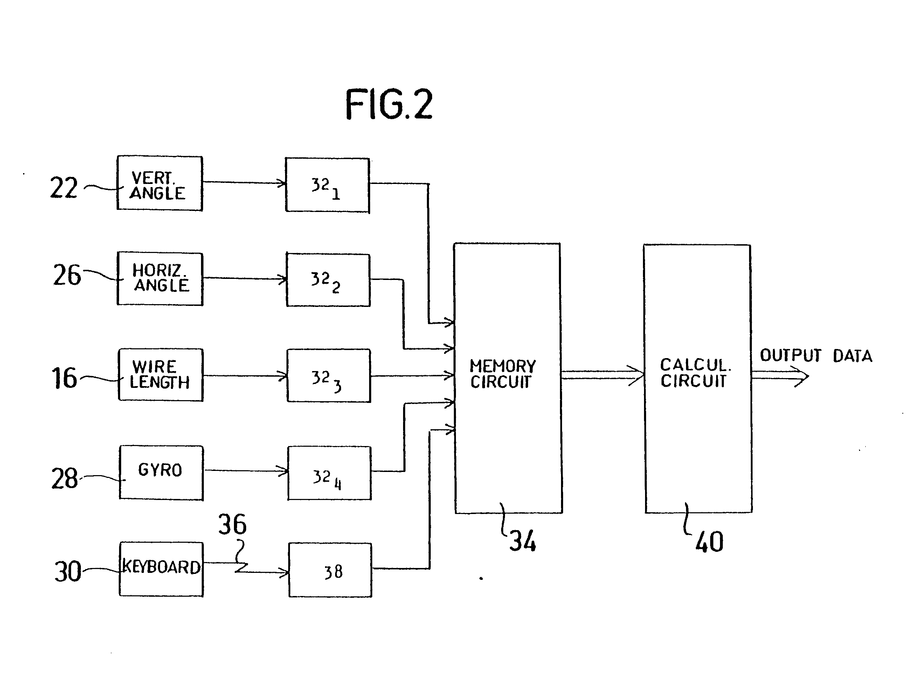

The invention is described below in greater detail in the form of an illustrative example with reference to the appended drawing, wherein Fig. 1 illustrates schematically the mechanical principles of the measuring instrument and Fig. 2 illustrates the electrical buildup in the form of a block diagram.

As shown in Fig. 1 the measuring instrument is provided with a store 10 for an extractable measuring wire 12. The measuring wire is placed over a wheel 14 connected to a digital angle transducer 16, the emitted signal of which, thus, is a measure of the length of extracted wire. After the wheel 14 the measuring wire 12 passes a swivel arm 18 turning around a horizontal axis 17. The outer end of the wire is affixed to a rod 20 by means of which the user can move the wire end to the point desired within the volume to be measured.

The vertical angle of the swivel arm 18 is sensed by means of a digital angle transducer 22. The latter forms together with the arm 18, the angle transducer 16, the wheel 14 and the store 10 a unit turning about a vertical axis 24, the obtained horizontal angle of said unit being sensed by means of a digital angle transducer 26, which is preferably of the same type as the angle transducer 22. The angle transducers 22 and 26 should be of the high-resolution type while the transducer 16 measuring wire length, can be of the low-resolution type.

In order to form an external reference for the measurements, related to a known system of coordinates, the measuring instrument is provided with a gyro device 28 which can either be used for a correct orientation of the instrument at its set-up within the volume to be measured or is made to emit a signal responding to the deviation from a reference direction in order to relate the measuring values to this reference direction.

A portable keyboard unit 30 also belongs to the measuring instrument by means of which the user can enter different data relevant to the measurement, e. g. desired measuring moment, additional information of the measuring point (such as ceiling, floor, corner, pipe) or for denomination of the measured volume. To simplify handling the measuring rod 20 is preferably affixed to the unit 30.

The angle transducers 22 and 26, the wire length transducer 16 and the gyro device 28 are connected to a memory circuit 34 via respective matching circuits $32_1$-$32_4$. The keyboard unit 30 is preferably via a wireless connection 36, e. g. a connection operating with ultrasonics or infrared light, and a matching circuit 38 connected to the memory circuit 34. The output of the memory circuit 34 is connected to a calculating circuit 40, e. g. a computer. The memory circuit 34 need not be separate but may be included in the calculating circuit 40. The matching circuits $32_1$-$32_4$ and 38 preferably consist of conventional interfaces for adaptation of the output signals from the transducer and the keyboard to the circuits 34, 40.

When measuring a volume, e. g. a room in a flat, the instrument is thus set up within this volume, after which it is oriented relative to a known external system of coordinates by means of the gyro device 28 and is aligned in respect of a reference direction, e. g. true to the north. Alternatively, such an alignment need not be made but the calculating unit 40 may instead use the output signals of the gyro device to relate the measurements to the reference direction. Moreover, one measurement is performed against a known and previously determined point outside the room (e. g. the hall).

After this the user moves the end of the measuring rod 20 to each of the desired measuring points, the required length of the measuring wire thus being extracted from the store 10 under simultaneous turning of the unit consisting of the members 10, 14, 16, 22 and 18 about the axis 24 and adjustment of the height angle of the arm 18. The user indicates a desired measuring moment by depression of a suitable key on the unit 30, the data arriving at this time from the angle transducers 16, 22, 26 at the memory circuit 34 being stored therein. For each measuring point the user enters via the keyboard unit 30 also the necessary data for the additional information of the measuring point, i. e. data regarding ceiling, floor, corner etc, so that these data are also stored in the memory circuit. The denomination of the relative volume is preferably also entered.

In certaing cases a desired measuring point may be hidden from the measuring instrument or otherwise be difficult to reach. The outer end of the measuring wire can then instead by moved to another point with a known relative position in respect of the desired measuring point, this relative position being simultaneously entered via the keyboard unit 30. The calculating unit 40 will then calculate the actual position of the desired measuring point starting from these data.

The process described is repeated for all desired measuring points in the volume, after which the measuring instrument is moved to the next volume to be measured and the corresponding measurements are carried out for this volume.

As a consequence of the gyro device 28 measurements regarding different volumes will be related to an external, independent reference. Therefore the measuring method will not only allow measurement of each volume with a great accuracy but also that the different measured volumes will be carefully related to each other, which is of an obvious importance at measurement of a plurality of rooms in one and the same building.

In Fig. 2 the gyro device 28 is shown as connected with the memory circuit 34. If alignment of the measuring instrument is carried out with respect to the external reference for every volume measured, this connection can be omitted.

As mentioned, the memory circuit 34 can be an integral part of a computer containing the calculating circuit 40, but it can also form a separate memory unit, e. g. a magnetic tape unit which stores all the measuring values and data related to these and which is later connected to a suitable calculating circuit. The part of the measuring equipment, which must be portable and brought along by the user during the very measurement, is then simplified.

The calculating circuit 40 is preferable operative to emit output signals which allow a direct display of dimensioned drawings on a desired scale, either on a display unit or in the form of an printout.

### Claims

1. A system for measurement of direction related volumes, preferably rooms and similar spaces in a building, the system comprising a measuring instrument which can be placed in the room and is provided with a) an extractable measuring wire (12), intended to be moved with its outer end to the position of a desired point, b) a first means (16) for noting the length of extracted measuring wire, and c) a second and a third means (22, 26) for noting the vertical and horizontal directions respectively, of the extracted measuring wire (12) from the measuring instrument to the outer end of the wire, characterized in that the first, the second and the third means are transducers (16, 22, 26) for emitting the respective signals representing extracted measuring wire to the desired measuring point, or a point with a known position relative to the measuring point, and the directions of the measuring wire in vertical and horizontal direction from the measuring instrument, which signals are fed to a calculating circuit (40), preferable a computer, operative to form output signals on the basis of the output signals from the three transducers (16, 22, 26) and predetermined additional information of the correspondences of the measuring points with ceiling, roof, corner etc, and, where appropriate, the position of the measuring point relative to a point with a known position, said output signals being directly useful for display of a dimensional drawing related to the measured volume.

2. The system of claim 1, characterized in that a memory circuit (34) is operative for temporary storage of the output signals of the transducers, before these are added to the calculating circuit (40).

3. The system of claim 1 or 2, characterized in that the measuring instrument includes a gyro device (28) for relating the measurement of each separate volume to a fixed reference direction and a known system of coordinates.

4. The system of claim 3, characterized in that the gyro device (28) is provided with a signal output for the supply of reference data to the calculating circuit (40).

5. The system of any one of the foregoing claims, characterized in that the outer end of the measuring wire (12) is affixed to one end of a rod (20) for moving this outer end to a desired measuring point.

6. The system of any one of the foregoing claims, characterized in that a preferably portable keyboard unit (30) is provided for manual feeding of data to the calculating circuit (40) regarding a desired measuring moment and said additional information of the measuring point.

7. The system of claims 5 and 6, characterized in that the other end of said rod (20) is affixed to the keyboard unit (30).

### Patentansprüche

1. Meßsystem für richtungsbezogene Volumen, bevorzugt Zimmer und ähnliche Räume in einem Gebäude, umfassend ein Meßinstrument, das in dem Raum anzuordnen ist und aufweist a) einen ausziehbaren Meßdraht (12), der mit seinem äußeren Ende zur Position eines gewünschten Punkts zu bewegen ist, b) ein erstes Element (16) zur Aufzeichnung der herausgezogenen Meßdrahtlänge und c) ein zweites sowie ein drittes Element (22, 26) zur Aufzeichnung der Vertikal-bzw. der Horizontalrichtung des ausgezogenen Meßdrahts (12) vom Meßinstrument zum äußeren Ende des Drahts, dadurch gekennzeichnet, daß das erste, das zweite und das dritte Element Meßwertaufnehmer (16, 22, 26) sind, die jeweils Signale entsprechend dem zum gewünschten Meßpunkt oder einem Punkt mit einer bekannten Lage relativ zum Meßpunkt ausgezogenen Meßdraht und entsprechend den Richtungen des Meßdrahts in Vertikal- und Horizontalrichtung vom Meßinstrument aussenden, wobei diese Signale einer Rechenschaltung (40), bevorzugt einem Computer, zugeführt werden, der Ausgangssignale auf der Grundlage der Ausgangssignale der drei Meßwertaufnehmer (16, 22, 26) und vorbestimmte Zusatzinformation betreffend die Übereinstimmung der Meßpunkte mit Decke, Dach, Ecke etc. und gegebenenfalls der Lage des Meßpunkts relativ zu einem Punkt mit bekannter Lage bildet, wobei diese Ausgangssignale direkt zur Anzeige einer auf das gemessene Volumen bezogenen räumlichen Zeichnung nutzbar sind.

2. System nach Anspruch 1, dadurch gekennzeichnet, daß ein Speicherkreis (34) die Ausgangssignale der Meßwertaufnehmer vorübergehend speichert, bevor diese der Rechenschaltung (40) zugeführt werden.

3. System nach Anspruch 1 oder 2, dadurch gekennzeichnet, daß das Meßinstrument eine Kreiselvorrichtung (28) aufweist, die die Messung jedes Einzelvolumens mit einer unveränderlichen Bezugsrichtung und einem bekannten Koordinatensystem in Beziehung setzt.

4. System nach Anspruch 3, dadurch gekennzeichnet, daß die Kreiselvorrichtung (28) einen Signalausgang aufweist zur Zuführung von Referenzinformation an die Rechenschaltung (40).

5. System nach einem der vorhergehenden Ansprüche, dadurch gekennzeichnet, daß das äußere Ende des Meßdrahts (12) an einem Ende einer Stange (20) befestigt ist, so daß dieses äußere Ende zum einem gewünschten Meßpunkt bewegbar ist.

6. System nach einem der vorhergehenden Ansprüche, dadurch gekennzeichnet, daß eine bevorzugt tragbare Tastatureinheit (30) zur manuellen Eingabe von Information hinsichtlich eines gewünschten Meßmoments und der genannten Zusatzinformation des Meßpunkts in die Rechenschaltung (40) vorgesehen ist.

7. System nach den Ansprüchen 5 und 6, dadurch gekennzeichnet, daß das andere Ende der Stange (20) an der Tastatureinheit (30) befestigt ist.

## Revendications

1. Système pour la mesure de volumes se rapportant à la direction, de préférence des pièces et espaces similaires dans un immeuble, le système comprenant un instrument de mesure qui peut être placé dans la pièce et est pourvu a) d'un fil de mesure (12) pouvant être extrait, destiné à être déplacé avec son extrémité externe à la position d'un point souhaité, b) d'un premier moyen (16) pour noter la longueur du fil extrait de mesure, et c) d'un second et d'un troisième moyens (22, 26) pour noter les directions verticale et horizontale respectivement, du fil de mesure extrait (12) de l'instrument de mesure jusqu'à l'extrémité externe du fil, caractérisé en ce que le premier, le second et le troisième moyens sont des transducteurs (16, 22, 26) pour émettre les signaux respectifs représentant le fil extrait de mesure jusqu'au point souhaité de mesure ou un point ayant une position connue relativement au point de mesure, et les directions du fil de mesure dans la direction verticale et horizontale à partir de l'instrument de mesure, lesquels signaux sont appliqués à un circuit de calcul (40), de préférence un ordinateur, servant à former des signaux de sortie sur la base des signaux à la sortie des trois transducteurs (16, 22, 26) et une information additionnelle prédéterminée des correspondances des points de mesure avec le plafond, le toit, le coin, etc., et, lorsque cela est approprié, la position du point de mesure relativement à un point ayant une position connue, lesdits signaux de sortie étant directement utiles pour un affichage d'un dessin dimensionnel se rapportant au volume mesuré.

2. Système de la revendication 1, caractérisé en ce qu'un circuit à mémoire (34) fonctionne pour un stockage temporaire des signaux à la sortie des transducteurs, avant que ceux-ci ne soient ajoutés au circuit de calcul (40).

3. Système de la revendication 1 ou 2, caractérisé en ce que l'instrument de mesure comprend un dispositif gyroscopique (28) pour mettre les mesures de chaque volume séparé en rapport avec une direction fixe de référence et un système connu de coordonnées.

4. Système de la revendication 3, caractérisé en ce que le dispositif gyroscopique (28) est pourvu d'une sortie de signaux pour la fourniture de la donnée de référence au circuit de calcul (40).

5. Système selon l'une quelconque des revendications précédentes, caractérisé en ce que l'extrémité externe du fil de mesure (12) est fixée à une extrémité d'une tige (20) pour déplacer cette extrémité externe jusqu'à un point souhaité de mesure.

6. Système selon l'une quelconque des revendications précédentes, caractérisé en ce qu'une unité à clavier, de préférence portable, (30) est prévue pour l'application manuelle des données au circuit de calcul (40) concernant un moment souhaité de mesure et ladite information additionnelle du point de mesure.

7. Système selon les revendications 5 et 6, caractérisé en ce que l'autre extrémité de ladite tige (20) est fixée à l'unité à clavier (30).

# FIG.1

# FIG.2